Europäisches Patentamt

(19) European Patent Office

Office européen des brevets

(11) **EP 1 097 555 B1**

(12) **EUROPEAN PATENT SPECIFICATION**

(45) Date of publication and mention
of the grant of the patent:
**23.04.2003 Bulletin 2003/17**

(21) Application number: **99932992.3**

(22) Date of filing: **16.07.1999**

(51) Int Cl.⁷: **H04L 29/12**, H04L 29/08

(86) International application number:
**PCT/GB99/02147**

(87) International publication number:
**WO 00/004690 (27.01.2000 Gazette 2000/04)**

(54) **COMPUTER NETWORK ADDRESSING SYSTEM**

ADRESSIERUNGSSYSTEM FÜR COMPUTER-NETZWERKE

SYSTEME D'ADRESSAGE D'UN RESEAU INFORMATIQUE

(84) Designated Contracting States:
**AT BE CH CY DE DK ES FI FR GB GR IE IT LI LU MC NL PT SE**

(30) Priority: **18.07.1998 GB 9815585**

(43) Date of publication of application:
**09.05.2001 Bulletin 2001/19**

(73) Proprietor: **Ontelno Limited**
**Blackpool, Lancashire, FY1 3QA (GB)**

(72) Inventors:
• **Fitton, Stuart James**
**Blackpool, Lancashire, FY5 3QA (GB)**
• **Beddows, Derek Kerr**
**Poulton-Le-Fylde, Lancashire, FY5 2JG (GB)**

(74) Representative: **Waddington, Richard et al**
**Appleyard Lees,**
**15 Clare Road**
**Halifax HX1 2HY (GB)**

(56) References cited:
**WO-A-97/31490** **WO-A-98/23080**

• **HUI S -C ET AL: "A dynamic IP addressing system for Internet telephony applications" COMPUTER COMMUNICATIONS,NL,ELSEVIER SCIENCE PUBLISHERS BV, AMSTERDAM, vol. 21, no. 3, page 254-266 XP004115293 ISSN: 0140-3664**
• **NETSCAPE: "Administrator's Guide, Netscape Directory Server, Version 3.0" , [Online] December 1997 (1997-12), page 260,326,332-333,335-336 XP002123088 Retrieved from the Internet: <URL:http://developer.netscape.com/docs/m a nuals/directory/admin30/admindir.pdf> [retrieved on 1999-11-11]**

**Description**

This invention relates to a method of enabling a user to address an intended target on a computer network and to apparatus for enabling a user to address an intended target on a computer network.

An existing method of accessing a world wide web (www) site for which the correct address is not known includes conducting a search of web sites by using key words, which it is hoped are included in the web site of interest. A number of problems arise with this method because it is almost always the case that a large number of web sites are found in the search and it is necessary to review the results of the search, which may take some time, to find the intended web site. The problem exists because a domain name (the address of a www site) which might be expected to be the correct name for the intended web site may well have already been registered to another company with a very similar name.

If, for instance, it is desired to obtain the web site of a firm of shop fitters called Frank Smith Shopfitters Limited it may be possible to guess their domain name as being frank.smith.co.uk. However, it may be the case that an unrelated company, eg. Frank Smith Skip Hire Limited, already has frank.smith.co.uk registered. This would lead to a situation in which Frank Smith Shopfitters Limited would have to choose a different domain name, which might not be readily found. In addition, there is no agreed standard by which a company or individual may convert its name to a domain name.

Similar problems also exist in relation to company and individual email addresses. Again, there is no agreed standard as to how a particular email address should be represented.

It is an object of the present invention to address the above mentioned disadvantages.

WO 97/31490 discloses the creation of a plurality of new domain names suitable for using with domain name servers by parsing telephone numbers.

According to one aspect of the present invention a method of enabling a user to address an intended target . on a computer network for which a network address is unknown to the user comprising;

providing access to a known host computer, with which a user may address the intended target;

characterised by

providing the host computer with a unique identifier for each intended target, and cross-referencing each unique identifier with the associated network address such that the user can obtain the network address of the intended target by entering the relevant unique identifier which is then cross-referenced by the computer to the associated network address, wherein the intended target is a world wide web (www) site or an email address, the network address is a www address or an email address, the unique identifier is a telephone number and the known host is a www site or an email domain name host.

The unique identifier may be available from directories, preferably public domain directories.

The host computer may facilitate a link to the intended target once the cross-referencing has been completed.

The intended target may be addressed by entering the address of the known host and the unique identifier substantially concurrently or simultaneously.

According to another aspect of the present invention apparatus for enabling a user to address an intended target on a computer network for which a network address is unknown to the user is characterised by comprising:

a known host computer having a known address and being provided with a unique identifier for each intended target and being adapted to receive from the user the relevant unique identifier and being adapted to cross reference each unique identifier to the associated network address, wherein the intended target is a www site or an email address, the network address is a www address or an email address, the unique identifier is a telephone number, and the known host is a www site or an email domain name host.

The host computer may host a world wide web site. The host computer may host an internet domain name.

The host computer may be accessed by entering the address of the host computer and the unique identifier simultaneously.

All of the above aspects may be combined with any of the features disclosed herein, in any combination.

Specific embodiments of the present invention will now be described, by way of example, and with reference to the accompanying drawing, in which:

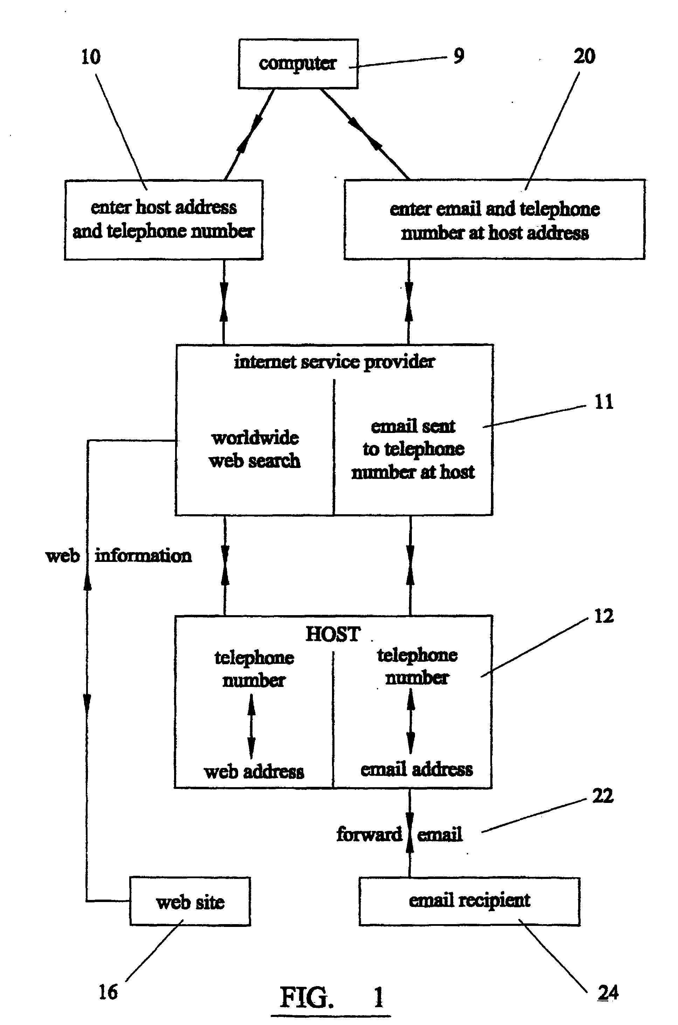

Figure 1 is a flow chart showing a method of addressing a web site or email destination using the telephone number of an intended target.

By using an existing, formatted, address combined with a constant computer host name a structured, consistent addressing system capable of standardisation is established.

The system comprises a host computer 12, which hosts a world wide web site for instance, which may have an address of eg. http://www/host.co.uk. When a person wishes to access the world wide web site 16 of a particular company, eg. Frank Smith Shopfitters but does not know the correct address for the world wide web site 16, then the system disclosed herein may be used to access the web site 16.

If Frank Smith Shopfitters have had their details entered onto the host 12, then a person wishing to access the company's web site 16 may simply enter into a computer 9 (see box 10 in figure 1) the web address of the host 12 combined with the telephone number of Frank Smith Shopfitters, which is 01253 010101, in the following way: http://www/host/01253/010101.

This information is transmitted via the user's internet service provider (ISP) 11 to the host 12, which has been pre-programmed to link the telephone number of Frank Smith Shopfitters (01253 010101) with the actual web address of the company, which in this case is http://www/FSmithshopfitt.co.uk.

On being given the telephone number of Frank Smith Shopfitters, the host 12 determines the correct web address from an index of cross-referenced telephone numbers and web addresses. The web site 16 (http://www/ FSmithshopfitt.co.uk) is transmitted back to the computer 9 of the person making the enquiry via the ISP 11.

Given that the telephone number of Frank Smith Shopfitters is widely available from existing directories and from the company itself, it is considerably easier to access the web site 16 of the company because the actual web site address may be very difficult to determine given the wide number of possibilities and the possibility that a different company with a similar name may have the expected web address. Consequently, a person wishing to access the world wide web site 16 of a particular company does not need to obtain details of the web site address from the company, because a telephone directory or similar can be accessed much more readily instead.

In the above example the STD code element of the telephone number has been subdivided into a separate directory by means of a /. This is not a requirement of the system, but may assist clarity.

The system is also capable of providing standardised email addressing by using the same host 12 as follows. To send an email to Frank Smith Shopfitters a user simply has to enter into the computer 9 the telephone number of Frank Smith Shopfitters combined with the address of the host 12 (see step 20 in Figure 1). The information entered would be for example, 01253/010101@host.co.uk. The system is pre-programmed to forward an email (see step 22 in Figure 1) sent to the above address 24 (via the ISP 11) to the stored email address of Frank Smith Shopfitters, which could for instance be FrankSmith@aol.com.

A standardised method of sending an email to a firm which has had its details entered on the host computer 12 is provided whereby a person can easily send an email by referring only to the firm's telephone number, rather than having to find out the correct email address.

Many companies and individuals can have their world wide web site 16 and email addresses entered onto the host computer 12 and cross-referred to their telephone numbers to allow very easy access by third parties.

The ISP 11 and the host 12 could be the same computer/computer system.

In effect, the internet and email address is formed by the combination of two separate constants: the host constant (host.co.uk) and the address constant (eg. 01253/010101). The host constant remains constant at all times, across the whole group of addressees which have had their details entered onto the system, whilst the address constant is a constant in its format, the specific figures being changed depending on the telephone number.

It would be possible to use another unique identifier, rather than a telephone number, if desired.

In general a world wide web address or email address according to the method described above has the following form:

$$\text{world wide web address} = \text{host constant} + \text{address constant}$$

$$\text{email address} = \text{address constant} + \text{@host constant.}$$

It may be the case that a number of different hosts 12 are used for particular categories of intended target. For example, a different host 12 may be accessed to address different countries, different types of business or to address individuals or companies.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly. stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of enabling a user to address an intended target (16, 24) on a computer network for which a network address is unknown to the user comprising;
   providing access to a known host computer (12), with which a user may address the intended target (16, 24);
   **characterised by**
   providing the host computer (12) with a unique identifier for each intended target, and cross-referencing each unique identifier with the associated network address such that the user can obtain the network address of the intended target (16, 24) by entering the relevant unique identifier which is then cross-referenced by the computer (12) to the associated network address, wherein the intended target is a world wide web (www) site (16) or an email address (24), the network address is a www address or an email address, the unique identifier is a telephone number, and the known host (12) is a www site or an email domain name host.

2. A method as claimed in either claim 1, in which the unique identifier is available from directories.

3. A method as claimed in either claim 1 or 2, in which the host computer (12) facilitates a link to the intended target (16, 24) once the cross-referencing has been completed.

4. A method as claimed in any preceding claim, in which the intended target (16, 24) is addressed by entering the address of the known host (12) and the unique identifier substantially concurrently.

5. Apparatus for enabling a user to address an intended target (16, 24) on a computer network for which a network address is unknown to the user is **characterised by** comprising:

   a known host computer (12) having a known address and being provided with a unique identifier for each intended target 16, 24), and being adapted to receive from the user the relevant unique identifier and being adapted to cross. reference each unique identifier to the associated network address, wherein the intended target is a www site (16) or an email address (24), the network address is a www address or an email address, the unique identifier is a telephone number, and the known host (12) is a www site or an email domain name host.

**Patentansprüche**

1. Verfahren, um es einem Benutzer zu ermöglichen, ein gewünschtes Ziel (16, 24), dessen Netzwerkadresse dem Benutzer unbekannt ist, in einem Computemetzwerk zu adressieren, wobei das Verfahren folgendes umfaßt:

   Bereitstellen eines Zugriffs auf einen bekannten Host-Computer (12), mit dem ein Benutzer das gewünschte Ziel (16, 24) adressieren kann;

   **dadurch gekennzeichnet, daß**
   der Host-Computer (12) für jedes gewünschte Ziel mit einem eindeutigen Identifizierer versehen wird, und daß jeder eindeutige Identifizierer zur zugeordneten Netzwerkadresse querverwiesen wird, so daß der Benutzer die Netzwerkadresse des gewünschten Ziels (16, 24) erhalten kann, indem er den relevanten eindeutigen Identifizierer eingibt, der dann durch den Computer (12) an die zugeordnete Netzwerkadresse querverwiesen wird, wobei das gewünschte Ziel eine Worldwide-Web(www)-Seite (16) oder E-Mail-Adresse (24), die Netzwerkadresse eine WWW-Adresse oder eine E-Mail-Adresse, der eindeutige Identifizierer eine Telefonnummer und der bekannte Host (12) eine WWW-Seite oder ein E-Mail-Domainnamen-Host ist.

2. Verfahren nach Anspruch 1, bei dem der eindeutige Identifizierer aus Verzeichnissen erhältlich ist.

3. Verfahren nach Anspruch 1 oder 2, bei dem der Host-Computer (12) eine Verbindung zu dem gewünschten Ziel (16, 24) ermöglicht, sobald der Querverweis vollständig ist.

**4.** Verfahren nach einem der vorhergehenden Ansprüche, bei dem das gewünschte Ziel (16, 24) adressiert wird, indem die Adresse des bekannten Host-Computers (12) und der eindeutige Identifizierer im wesentlichen gleichzeitig eingegeben werden.

**5.** Vorrichtung, um es einem Benutzer zu ermöglichen, ein gewünschtes Ziel (16, 24), dessen Netzwerkadresse dem Benutzer unbekannt ist, in einem Computernetzwerk zu adressieren, wobei die Vorrichtung **dadurch gekennzeichnet ist, daß** sie folgendes umfaßt:

einen bekannten Host-Computer (12), der eine bekannte Adresse aufweist und für jedes gewünschte Ziel (16, 24) mit einem eindeutigen Identifizierer versehen wird, und der dazu ausgelegt ist, vom Benutzer den relevanten eindeutigen Identifizierer zu empfangen und jeden eindeutigen Identifizierer an die zugehörige Netzwerkadresse querzuverweisen, wobei das gewünschte Ziel eine WWW-Seite (16) oder eine E-Mail-Adresse, die Netzwerkadresse eine WWW-Adresse oder eine E-Mail-Adresse, der eindeutige Identifizierer eine Telefonnummer und der bekannte Host (12) eine WWW-Seite oder ein E-Mail-Domainnamen-Host ist.

**Revendications**

**1.** Procédé pour permettre à un utilisateur d'adresser une cible voulue (16, 24) sur un réseau informatique pour laquelle une adresse de réseau est inconnue de l'utilisateur comprenant :

la fourniture d'un accès à un ordinateur central connu (12), par lequel un utilisateur peut adresser la cible voulue (16, 24) ;

**caractérisé par**
la fourniture à l'ordinateur central (12) d'un identifieur unique pour chaque cible voulue, et un renvoi réciproque de chaque identifieur unique à l'adresse de réseau associée pour que l'utilisateur puisse obtenir l'adresse de réseau de la cible voulue (16, 24) en entrant l'identifieur unique concerné, qui est alors renvoyé par l'ordinateur (12) à l'adresse de réseau associé, où la cible voulue est un site Internet (www) (16) ou une adresse email (24), l'adresse de réseau est une adresse www ou une adresse email, l'identifieur unique est un numéro de téléphone, et l'ordinateur central connu (12) est un hébergeur de nom de domaine de site Internet ou d'email.

**2.** Procédé selon la revendication 1, dans lequel l'identifieur unique est disponible à partir de répertoires.

**3.** Procédé selon la revendication 1 ou 2, dans lequel l'ordinateur central (12) facilite une liaison vers la cible voulue (16, 24) une fois que le renvoi réciproque a été terminé.

**4.** Procédé selon l'une quelconque des revendications précédentes, dans lequel la cible voulue (16, 24) est adressée en introduisant l'adresse de l'ordinateur connu (12) et l'identifieur unique substantiellement simultanément.

**5.** Appareil pour permettre à un utilisateur d'adresser une cible voulue (16, 24) sur un réseau informatique pour lequel une adresse de réseau est inconnue de l'utilisateur, est **caractérisé en ce qu'**il comprend :

un ordinateur central connu (12) ayant une adresse connue et étant pourvu d'un identifieur unique pour chaque cible voulue (16, 24), et étant adapté pour recevoir de l'utilisateur l'identifieur unique concerné et étant adapté pour renvoyer chaque identifieur unique à l'adresse de réseau associée, où la cible voulue est un site Internet (16) ou une adresse email (24),
l'adresse de réseau est une adresse Internet ou une adresse email, l'identifieur unique est un numéro de téléphone et l'ordinateur central connu (12) est un hébergeur de nom de domaine de site Internet ou d'un email.

FIG. 1